(19) Europäisches Patentamt
European Patent Office
Office européen des brevets

(11) **EP 2 466 769 B1**

(12) **EUROPEAN PATENT SPECIFICATION**

(45) Date of publication and mention
of the grant of the patent:
**06.03.2019 Bulletin 2019/10**

(21) Application number: **10807937.7**

(22) Date of filing: **07.07.2010**

(51) Int Cl.:
***H04Q 11/00*** (2006.01)

(86) International application number:
**PCT/CN2010/075035**

(87) International publication number:
**WO 2011/017992 (17.02.2011 Gazette 2011/07)**

(54) **BANDWIDTH ALLOCATION METHOD AND OPTICAL LINE TERMINAL**

BANDBREITENZUWEISUNGSVERFAHREN UND OPTISCHES LEITUNGSENDGERÄT

PROCÉDÉ D'ATTRIBUTION DE BANDE PASSANTE ET TERMINAL DE LIGNE OPTIQUE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **13.08.2009 CN 200910165298**

(43) Date of publication of application:
**20.06.2012 Bulletin 2012/25**

(73) Proprietor: **ZTE Corporation
Shenzhen, Guangdong 518057 (CN)**

(72) Inventor: **SUN, Wu
Guangdong 518057 (CN)**

(74) Representative: **Office Freylinger
P.O. Box 48
8001 Strassen (LU)**

(56) References cited:
**EP-A1- 2 466 769      WO-A1-2008/074364
CN-A- 1 728 640      CN-A- 101 385 383
CN-A- 101 753 412      CN-A- 101 753 412
CN-A- 101 753 431      US-A1- 2007 133 989**

- **"Gigabit-capable Passive Optical Networks
(G-PON): Transmission convergence layer
specification; G.984.3 (03/08)", ITU-T
STANDARD, INTERNATIONAL
TELECOMMUNICATION UNION, GENEVA ; CH,
no. G.984.3 (03/08), 29 March 2008 (2008-03-29),
pages 1-146, XP017588388, [retrieved on
2009-04-24]**

## Description

### Field of the Invention

The present invention relates to the communication field, and in particular to a bandwidth allocation method and an optical line terminal.

### Background of the Invention

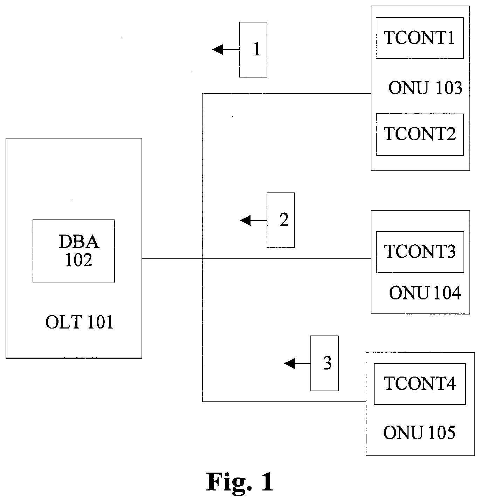

Gigabit Passive Optical Network ("GPON" for short) is a communication protocol of the passive optical network regulated by the International Telecommunications Union-Telecommunications standardization sector ("ITU-T" for short) G984, and the GPON uses a point-to-multipoint topology. Fig. 1 is a schematic diagram of a topology of a GPON network in the related art. As shown in Fig. 1, an optical line terminal ("OLT" for short) 101 is a main node connected with many optical network units ("ONU" for short) such as ONU 103, ONU 104 and ONU 105 which are slave nodes and each comprise one or more transport containers ("TCONT" for short) such as TCONT1 to TCONT4. The TCONTs report to the OLT, through a dynamic bandwidth report upstream ("DBRU" for short) message, the amount of data that are buffered by the TCONTs and need to be transferred to the OLT, and then uplink data are transferred according to the bandwidth allocated by the OLT.

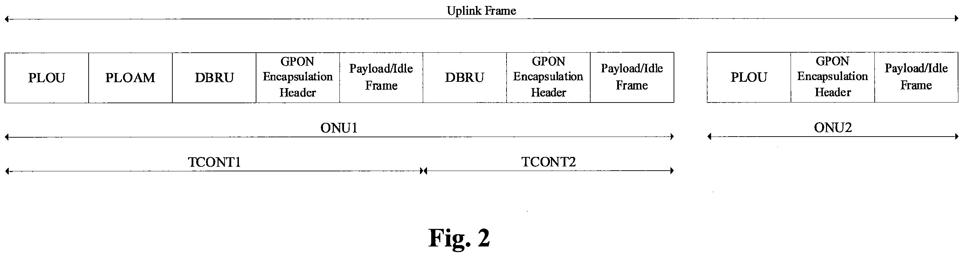

Fig. 2 is a schematic diagram showing a frame structure of an uplink frame in related art. As shown in Fig. 2, the frame structure of the uplink frame comprises physical layer overheads (PLOU), physical layer OAM (PLOAM), DBRU, GPON encapsulation header (GEM header), payload, idle frame, etc. It should be particularly indicated that the PLOU field can be shared by all TCONTs in a same ONU. In other words, when different TCONTs in the same ONU are allocated with bandwidths, they can come up continuously or intermittently

In the optical network, there are two types of technologies for allocating the bandwidth, namely, static bandwidth allocation ("SBA" for short) and dynamic bandwidth allocation ("DBA" for short). As to SBA, TCONTs are allocated with fixed time slots for uploading data, which mechanism easily results in insufficient use of some time slots. As to DBA, the OLT dynamically allocates the bandwidth according to the DBRU reports from a TCONT and the upstream traffic statistic in conjunction with the service level agreement ("SLA" for short), and the DBA algorithm can dynamically adjust the bandwidth allocation according to the change of the traffic.

Up to now, there are already many DBA algorithms in the art, for instance, a typical algorithm is so-called interleaved polling with adaptive cycle time ("IPACT" for short) algorithm, which method will poll all TCONTs and meanwhile get the DBRU reports from each TCONT so as to acquire the situation of the TCONTs buffering data and then to determine the quantity of bandwidth to be allocated.

However, the IPACT algorithm still has its own defects. The first one is that the OLT is incapable of precisely getting the data traffic transferred from a customer premises equipment ("CPE" for short) to the TCONTs in one DBA cycle. The second one is the IPACT algorithm cannot precisely estimate the overheads of the uplink traffic, in which the overheads comprise DBRU, PLOAM, GEM header and idle frame, etc.

### Summary of the Invention

The present invention is proposed in view of the problems in the related art that an IPACT algorithm is incapable of acquiring the traffic transferred from a customer premises equipment to TCONTs or precisely estimating overheads of the uplink traffic. Therefore, one aspect of the present invention is to provide a bandwidth allocation solution to solve at least one of the above problems.

In order to achieve the above object, according to one aspect of the present invention, a bandwidth allocation method in accordance with claim 1 is provided.

The bandwidth allocation method according to the present invention is used for an optical line terminal OLT to allocate a bandwidth to an optical network unit ONU. The method comprises: estimating input traffic of the ONU according to information from the ONU; setting an input traffic transition signal, wherein the input traffic transition signal is used for indicating a change of the input traffic of two adjacent dynamic bandwidth allocation (DBA) cycles of the ONU; and allocating the bandwidth to the ONU according to the input traffic of the ONU and the input traffic transition signal.

Preferably, estimating the input traffic of the ONU comprises: estimating the input traffic of the ONU according to an uplink dynamic bandwidth report upstream (DBRU) and uplink data traffic from the ONU, wherein the DBRU comprises a data quantity buffered by the ONU.

Preferably, The input traffic of the ONU is estimated through the following formula: $Est(n)=DBRU(n-1)-DBRU(n-2)+pm(n-2)$, where $Est(n)$ represents an estimation value of the input traffic of the ONU, $pm(n-2)$ represents the uplink data traffic sent from the ONU to the OLT in an $(n-2)$-th DBA cycle, and $DBRU(n-1)$ and $DBRU(n-2)$ represent data quantities buffered by the ONU in an $(n-1)$-th DBA cycle and the $(n-2)$-th DBA cycle, respectively.

Preferably, allocating the bandwidth to the ONU according to the input traffic of the ONU and the input traffic transition signal comprises: when the input traffic transition signal indicating that an abrupt change occurs to the input traffic of two adjacent DBA cycles of the ONU, bandwidth allocated by the OLT to the ONU is greater than bandwidth allocated by the OLT to the ONU, when no abrupt change occurs to the input traffic of two adjacent DBA cycles of the ONU.

Preferably, when an abrupt change occurs to the input traffic of two adjacent DBA cycles of the ONU, the bandwidth allocated to the ONU is calculated through the following formula: $Grant(n) = DBRU(n-1) + coef1*Est(n)$, where $Est(n)$ represents an estimation value of the input traffic of the ONU, $DBRU(n-1)$ represents a data quantity buffered by the ONU in the $(n-1)$-th DBA cycle, $Grant(n)$ represents bandwidth allocated to the ONU in an $n$-th DBA cycle, and $coef1$ represents a predetermined value.

Preferably, when no abrupt change occurs to the input traffic of two adjacent DBA cycles of the ONU, the OLT allocates the bandwidth to the ONU according to the estimation value of the input traffic of the ONU and overheads.

Estimating the input traffic of the ONU comprises: estimating the input traffic of the ONU according to the uplink data traffic from the ONU.

An abrupt change occurs to the input traffic transition signal when the uplink data traffic of the ONU transitions from below a threshold to above the threshold, and the OLT allocates maximum uplink bandwidth to the ONU; and an abrupt change occurs to the input traffic transition signal when the uplink data traffic of the ONU transitions from above the threshold to below the threshold, and the OLT does not allocate uplink bandwidth to the ONU.

Preferably, when no abrupt change occurs to the input traffic of two adjacent DBA cycles of the ONU, the bandwidth allocated to the ONU is calculated through the following formula: $Grant(n) = alpha* Grant(n-1) + (1-alpha)*(Est(n)+overhead(n))$, where $Est(n)$ represents an estimation value of the input traffic of the ONU, $Grant(n)$ represents bandwidth allocated to the ONU in the $n$-th DBA cycle, $Grant(n-1)$ represents bandwidth allocated to the ONU in the $(n-1)$-th DBA cycle, and an alpha value is greater than or equal to 0 and less than or equal to 1, wherein $overhead(n)$ represents the size of overheads in the $n$-th DBA cycle.

Preferably, calculating the size of the overheads comprises: if a responding cycle of the DBA is two cycles, the overheads being calculated through the following formula: $overhead(n+1) = Grant(n-1) - (pm(n+1)+idle(n+1))$, where $overhead(n+1)$ represents the size of the overheads in an $(n+1)$-th DBA cycle, $Grant(n-1)$ represents bandwidth allocated to the ONU in the $(n-1)$-th DBA cycle, $pm(n+1)$ represents uplink data traffic sent from the ONU to the OLT in the $(n+1)$ DBA cycle, and $idle(n+1)$ represents a statistic value of idle data sent from the ONU in the $(n+1)$ DBA cycle; if the responding cycle of the DBA is one cycle, the overheads being calculated through the following formula: $overhead(n+1) = Grant(n) - (pm(n+1)+ idle(n+1))$; and if the responding cycle of the DBA is three cycles, the overheads being calculated through the following formula: $overhead(n+1) = Grant(n-3) - (pm(n+1)+idle(n+1))$.

Preferably, the above method further comprises: adding an identifier to service level agreement protocol (SLA) information, wherein the identifier is used to determine, according to a location of a current TCONT of the ONU in a TCONT linked list, whether to allocate bandwidth to the current TCONT.

In order to achieve the above object, an optical line terminal as claimed in claim 5 is also provided according to another aspect of the present invention.

The optical line terminal of the present invention comprises a calculating module configured to estimate input traffic of an optical network unit (ONU) according to information from the ONU; a setting module configured to set input traffic transition signal, wherein the input traffic is used for indicating a change of the input traffic of two adjacent dynamic bandwidth allocation (DBA) cycles of the ONU; and an allocating module configured to allocate the bandwidth to the ONU according to the input traffic of the ONU and the input traffic transition signal.

Preferably, the calculating module is specifically configured to estimate the input traffic of the ONU according to a dynamic bandwidth report upstream DBRU and an uplink data traffic from the ONU, wherein the DBRU contains a data quantity buffered by the ONU.

Preferably, the calculating module is specifically configured to estimate the input traffic of the ONU according to the uplink data traffic from the ONU.

With the present invention, the problems in the related art that the IPACT algorithm is incapable of acquiring the traffic transferred from a customer premises equipment to TCONTs or precisely estimating overheads of the uplink traffic are solved by allocating the bandwidth to an ONU according to the input traffic of the ONU and the input traffic transition signal, and further a steady bandwidth allocation, a good transmission delay and a sufficient use of the uplink bandwidth are obtained.

**Brief Description of the Drawings**

The drawings illustrated here provide a further understanding of the present invention and form a part of the present application. The exemplary embodiments and the description thereof are used to explain the present invention without unduly limiting the scope of the present invention, wherein:

3

Fig. 1 is a schematic diagram of a topology of a GPON network in the related art;

Fig. 2 is a schematic diagram of a frame structure of an uplink frame in relatedart;

Fig. 3 is a flow chart of a bandwidth allocation method according to an embodiment of the present invention;

Fig. 4 is an integral frame chart of a GPON dynamic bandwidth allocation solution according to an embodiment of the present invention;

Fig. 5 is a schematic diagram of a structure of communication betweenan OLT and an ONU according to an embodiment of the present invention;

Fig. 6 is a schematic diagram of a time sequence of communication betweenan OLT and an ONU according to an embodiment of the present invention;

Fig. 7 is a flow chart of an SR-DBA algorithm according to an embodiment of the present invention;

Fig. 8 is a flow chart of an NSR-DBA algorithm according to an embodiment of the present invention;

Fig. 9(a) is a schematic diagram showing that different TCONTs in the same ONU share the PLOU overheads according to an embodiment of the present invention;

Fig. 9(b) is a schematic diagram showing that different TCONTs in the same ONU do not share the PLOU overheads according to an embodiment of the present invention; and

Fig. 10 is a structural frame chart of an OLT according to an embodiment of the present invention.

**Detailed Description of Embodiments**

What needs to be explained is, if there is no conflict, the embodiments of the present invention and the characters in it can be combined with each other The present invention will be explained in detail hereinafter in conjunction with the drawings and the embodiments.

In the following embodiments, the steps shown in the flow charts in the figures can be executed in a computer system with a set of computer executable instructions. Moreover, though logical orders are shown in the flow charts, in some cases, the steps shown or described can be executed in an order different that herein.

Embodiment 1

In view of the problems in the related art that the IPACT algorithm is incapable of acquiring the traffic transferred from a customer premises equipment to TCONTs or precisely estimating the overheads of the upstream traffic, the present embodiment provides a bandwidth allocation solution. The processing principle of this solution is: estimating input traffic of an ONU according to information from the ONU; setting input traffic transition signal, wherein the input traffic transition signal is used for indicating a change of the input traffic of two adjacent dynamic bandwidth allocation DBAcycles of the ONU; and allocating bandwidth to the ONU according to the input traffic of the ONU and the input traffic transition signal. This solution provides a whole framework of the DBA comprising a dynamic bandwidth allocation based on DBRU reports (Status Reporting DBA, "SR-DBA" for short) and a dynamic bandwidth allocation not based on the DNRU reports (Non-Status Reporting DBA, "NSR-DBA" for short) algorithms.

In order to better explain the present embodiment, a framework of the present embodiment will be firstly described. The framework comprises a bandwidth estimating module which is configured to estimate input traffic at an ONU terminal and to which the SR-DBA and NSR-DBA algorithms provided in the embodiments of the present invention are applied; a bandwidth calculating module which is configured to calculate, according to SLA configured by configuration software and the input traffic at the ONU terminal estimated by the bandwidth estimating module, a bandwidth to be obtained by a certain TCONT; a BWMAP table entry generating module which is configured to generate, according to the bandwidth calculated by the bandwidth calculating module, a BWMAP table entry of a certain TCONT, wherein contents of the entry include starting time and ending time, etc., at which a certain TCONT is allowed to send the uplink traffic; and a BWMAP table module which is configured to store BWMAP table entry information of all TCONTs. The present embodiment will be explained based on this framework.

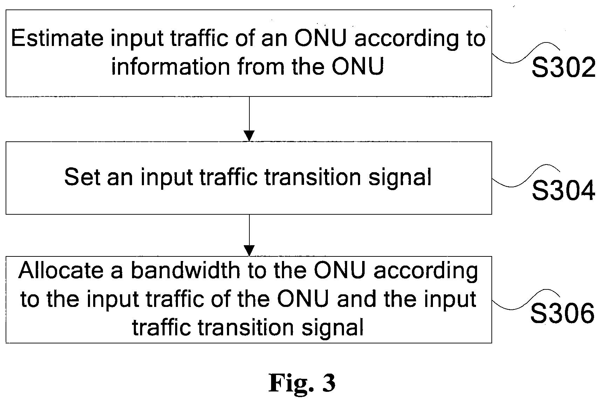

A bandwidth allocation method is provided according to an embodiment of the present invention and used for an OLT to allocate bandwidth to an ONU. Fig. 3 is a flow chart of the bandwidth allocation method according to the embodiment of the present invention. As shown in Fig. 3, the method comprises Step S302 to Step S306 as follows.

Step S302, estimate input traffic of the ONU according to information from the ONU.

Steps S304, set an input traffic jump signal, wherein the input traffic jump signal is used for indicating a change of the input traffic of two adjacent dynamic bandwidth allocation DBA cycles of the ONU For example, the input traffic transition signal is defined according to the estimation value of the input traffic of the ONU and the change of two adj acent DBA cycles, and the signal is allowed to remain for some DBA cycles until an idle frame statistic coming up starts to reach a certain value.

Step S306, allocate bandwidth to the ONU according to the input traffic of the ONU and the input traffic transition signal.

With the embodiments of the present invention, the defects of the IPACT algorithm are overcome by allocating the bandwidth to the ONU according to the input traffic of the ONU and the input traffic transition signal, and meanwhile a steady bandwidth allocation, a good transmission delay and a sufficient use of the uplink bandwidth are obtained.

After the Step S306, various signal variables, including input traffic estimation value, a DBRU value and an allocated bandwidth value, to be used in the algorithm can be stored.

In the above, the step S302 can be performed in two manners: manner 1 is SRDBA, and manner 2 is NSR-DBA. The two manners will be introduced in the following, respectively.

Manner 1

The input traffic of the ONU is estimated according to a DBRU report and an uplink data traffic from the ONU, wherein the DBRU report contains a data quantity buffered by the ONU (it should be indicated that it is the data quantity buffered in the DBRU report that is used in the present embodiment, and other contents in this report, such as identifier bit, will not be unnecessarily described in detail herein as they do not relate to the estimation of the input traffic), that is, the input traffic of the ONU is estimated according to the DBRU report and the uplink traffic sent from the ONU, wherein the input traffic of the ONU can be estimated according to the following formula:
$Est(n)=DBRU(n-1)-DBRU(n-2)+pm(n-2)$, where $Est(n)$ represents an estimation value of the input traffic, $pm(n-2)$ represents an uplink data traffic sent from the ONU to the OLT in the (n-2)-th cycle, and $DBRU(n-1)$ and $DBRU(n-2)$ represent data quantities buffered by the ONU in the (n-1)-th DBA cycle and the (n-2)-th DBA cycle, respectively; and if the DBRU report does not contain the data immediately to be sent from the TCONT, the $pm(n-2)$ in the above formula is replaced with $pm(n-1)$.

In this manner, when the bandwidth is allocated, bandwidth allocated by the OLT to the ONU, when the input traffic transition signal indicates an abrupt change occur to the input traffic of two adjacent DBA cycles of the ONU, is greater than bandwidth allocated by the OLT to the ONU, when no abrupt change occurs to the input traffic of two adjacent DBA cycles of the ONU, that is, when input traffic transition occurs, the OIT needs to allocate more bandwidth to the ONU because a response of the OIT to a bandwidth requirement of the ONU needs to be delayed by several DBA cycles; and when no input traffic transition occurs, the estimation value of the input traffic and the overheads are allocated, wherein when an abrupt change occurs to the input traffic of two adjacent DBA cycles of the ONU, bandwidth allocated to the ONU can be calculated according to the following formula:
$Grant(n)=DBRU(n-1)+coef1*Est(n)$, where $Est(n)$ represents an estimation value of the input traffic, $DBRU(n-1)$ represents a data quantity buffered by the ONU in the (n-1)-th DBA cycle, $Grant(n)$ represents the bandwidth allocated to the ONU in the n-th DBA, and coefl can be determined during debugging according to practical situations.

When no abrupt change occurs to the input traffic of two adjacent DBAcycles of the ONU, the OLT allocates the bandwidth to the ONU according to the estimation value of the input traffic and the overheads.

Manner 2

The input traffic of an ONU is estimated according to uplink data traffic from the ONU.

An abrupt change occurs to the input traffic transition signal when the uplink data traffic of the ONU transitions from below a threshold value to above the threshold value, then the OLT allocates the maximum uplink bandwidth to the ONU An abrupt change occurs to the input traffic transition signal when the uplink data traffic of the ONU transitions from above the threshold value to below the threshold value, then the OLT does not allocate the uplink bandwidth to the ONU

In the two manners above, when no abrupt change occurs to the input traffic of two adjacent DBA cycles of the ONU, the bandwidth allocated to the ONU can be calculated according to the following formula
$Grant(n)=alpha*Grant(n-1)+(1-alpha)*(Est(n)+overhead(n))$, where $Est(n)$ represents an estimation value of the input traffic, $Grant(n)$ represents bandwidth allocated to the ONU in the n-th DBA cycle, $Grant(n-1)$ represents bandwidth allocated to the ONU in the (n-1)-th DBA cycle, and an alpha value is greater than or equal to 0 and less than or equal to 1.

Next, the process of implementing embodiments of the present invention will be described in detail in conjunction with examples.

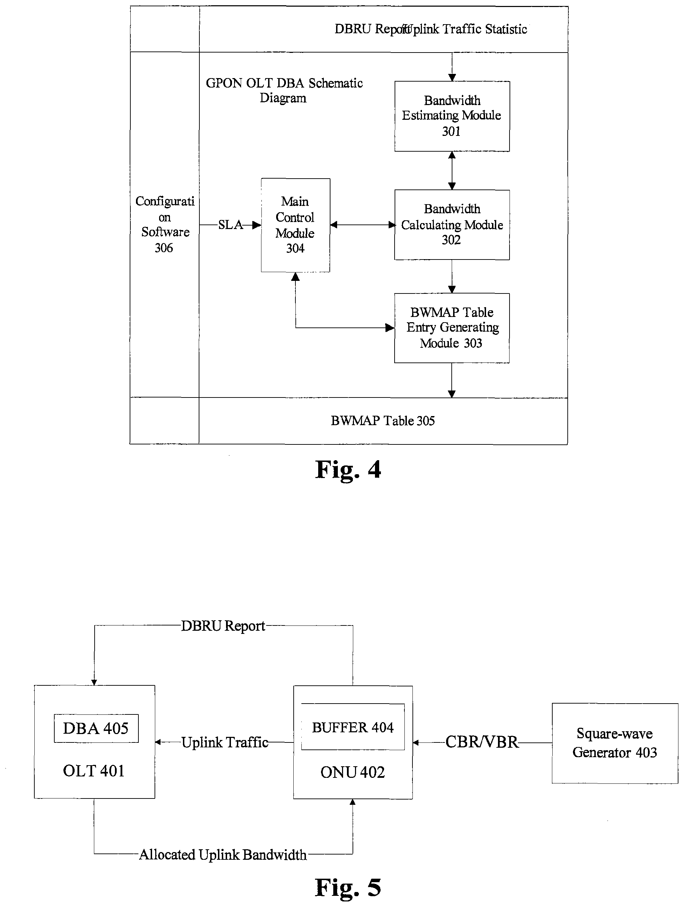

Fig. 4 is an integral frame chart of a GPON dynamic bandwidth allocation solution according to an embodiment of the present invention. As shown in Fig. 4, a dynamic bandwidth allocating module in the present embodiment comprises five modules.

A bandwidth estimating module (Bandwidth Prediction) 301 obtains, from other modules of a chip, a quantity of buffered data reported by an ONU (i.e., a DBRU report) and an uplink data traffic statistic, and then estimates an input traffic of the ONU, wherein the estimation value is sent to a bandwidth calculating module (Bandwidth Calculation) 302; a configuration software (Software) 306 meanwhile also configures SLA information for the bandwidth calculating module 302 through a main control module (Main Control) 304, wherein the SLA information contains information such as the maximum value of the bandwidth that the current ONU can be allocated and priority level of the ONU; the bandwidth calculating module 302 realizes the bandwidth calculating algorithm stipulated by G 984.3 protocol, according to information from the bandwidth estimating module 301 and the configuration software 306, so as to obtain bandwidths allocated to each TCONT; the allocated bandwidths are sent into a BWMAP table entry generating module (Access Generating) 303, the entry generating module arranges the bandwidth for each TCONT one by one in the bandwidth of the uplink frame, including information such as starting time and ending time at which each TCONT can send the uplink data; entries generated by the BWMAP table entry generating module 303 are sent into and stored in a BWMAPtable 305 and subsequently become one part of a downlink frame to be sent to each ONU, so as to inform each ONU of sending the uplink traffic in a period of time regulated by the OLT. The main control module 304 is responsible for coordinating and controlling the order of operations of the other modules.

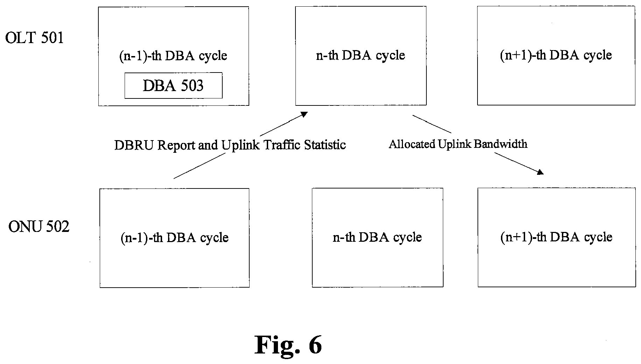

Next, the algorithms in the present embodiment wil be introduced in detail in conjunction with Fig. 5 and Fig. 6. Fig. 5 is a schematic diagram of a structure of communication between an OLT and an ONU according to an embodiment of the present invention, and Fig. 6 is a schematic diagram of a time sequence of communication between an OLT and an ONU according to an embodiment of the present invention.

As shown in Fig. 5, a square-wave generator (Signal Generator) 403 is an input signal source of an ONU 402, wherein the signal source includes a constant data flow (Constant Bit Rate, "CBR" for short) and an abrupt change data flow (Variable Bit Rate, "VBR" for short). The SR-DBA algorithm is applied to, but not limited to, CBR/VBR, and can be adapted to an arbitrary input waveform. After having received an input data from the square-wave generator 403, the ONU 402 will buffer the same in a BUFFER 404 and meanwhile reports a data quantity in the BUFFER 404 to an OIT 401 through a DBRU report. After the OLT 401 having received the DBRU report and uplink traffic data of the ONU, the DBA 405 obtains, through the DBA algorithm, uplink bandwidth allocated to each ONU. The ONU 402 will determine to send a certain quantity of uplink data according to the allocated uplink bandwidth and the data quantity stored by the BUFFER 404, wherein, the quantity of uplink data is one that has a small value in the uplink bandwidth allocated by the OLT and all current data in the BUFFER 404.

Fig. 6 shows a relation of a time sequence of the communication between the OIT and the ONU. As shown in Fig. 6, in the (n-1)-th DBA cycle, the ONU will report the DBRU report and send the uplink traffic; in the n-th DBA cycle, the DBA algorithm will perform a DBA operation, according to the DBRU report and a statistic value of the uplink traffic, to obtain uplink bandwidth allocated to each ONU, so that the ONU sends the uplink data in the (n+1)-th DBA cycle. Obviously, the DBRU demand reported by the ONU will get a response after two DBAcycles.

In the process of the communication between the OLT and the ONU, a formula (a) is set up for the ONU

$$DBRU(n-1) = DBRU(n-2) + IN(n-1) - pm(n-2) \qquad \text{formula (a)}$$

In the above, IN(n-1) represents a data quantity received by the ONU from the square-wave generator 403 in the (n-1)-th DBA cycle, pm(n-2) represents an uplink data traffic sent from the ONU to the OLT in the (n-2)-th DBA cycle, and DBRU(n-1) and DBRU(n-2) represent data quantities buffered in the (n-1)-th DBA cycle and the (n-2)-th DBA cycle respectively. At the OLT terminal, all of pm(n-2), DBRU(n-1) and DBRU(n-2) can be obtained, such that the estimation value Est(n) of a data flow IN(n-1) input at the OLT terminal for the ONU terminal is obtained from formula (b):

$$Est(n) = DBRU(n-1) - DBRU(n-2) + pm(n-2) \qquad \text{formula (b)}$$

In the process of the communication between the OLT and the ONU, a formula (c) is set up according to Fig. 6.

$$Grant(n-1) = pm(n+1) + idle(n+1) + overhead(n+1) \qquad \text{formula (c)}$$

In the (c), Grant(n-1) represents bandwidth actually allocated by the bandwidth calculating module 302 to the TCONT in the (n-1)-th DBA cycle, pm(n+1) represents a statistic value of the uplink data traffic sent from the ONU to the OIT in the (n+1)-th DBA cycle, and idle(n+1) and overhead(n+1) represent a statistic value of an idle data sent from the ONU and a size of overheads in the (n+1)-th DBA cycle, respectively. At the OLT terminal, all of Grant(n-1), pm(n+1) and idle(n+1) can be obtained, so that a calculated value of the overheads overhead(n+1) to the ONU terminal at the OIT terminal can be obtained from (d):

$$\text{overhead}(n+1) = \text{Grant}(n-1) - (\text{pm}(n+1) + \text{idle}(n+1)) \qquad \text{formula (d)}$$

It should be indicated that when a response cycle is one or three DBA cycles, Grant(n-1) in the above formula can be adjusted to be Grant(n) or Grant(n-2).

Next, processes of the SR-DBA and NSR-DBA algorithms in the present embodiment will be introduced.

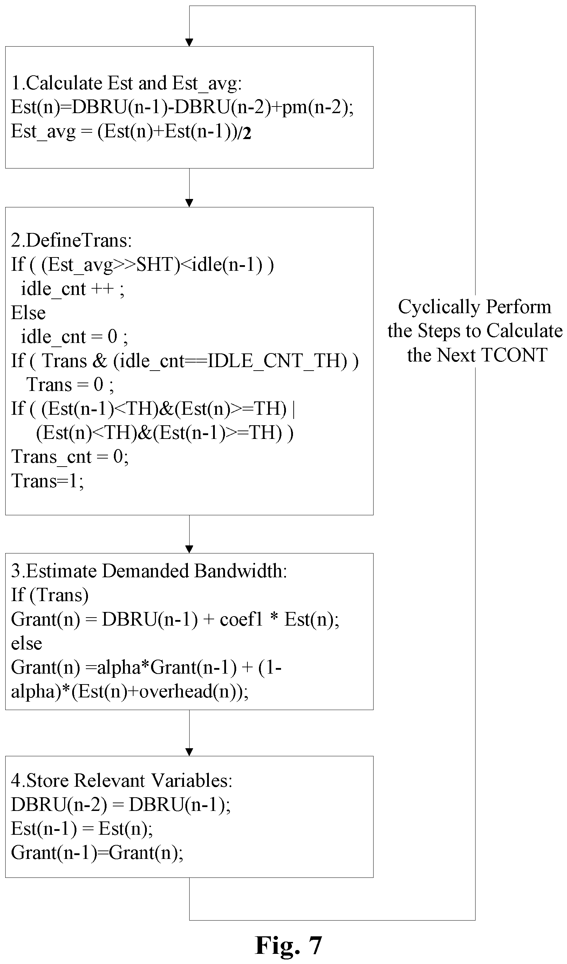

Fig. 7 is a flow chart of an SR-DBA algorithm according to an embodiment of the present invention. As shown in Fig. 7, the formula (b) constitutes the first step in the flow chart of the algorithm shown in Fig. 7. In this step, an input data flow of an ONU can be estimated through the following procedures, wherein Est_avg represents a mean value of Est and can be realized through the following codes:

$$\text{Est}(n) = \text{DBRU}(n-1) - \text{DBRU}(n-2) + \text{pm}(n-2);$$

$$\text{Est\_avg} = (\text{Est}(n) + \text{Est}(n-1))/2.$$

In the second step shown in Fig. 7, a signal Trans that describes an estimation value Est abrupt change is defined. The Trans signal will remain up to that an idle frame coming up is unnegligible with respect to the traffic coming up. This step can be realized through the following program codes:

```
If ((Est_avg>>SHT)<idle(n-1))
    idle_cnt ++;
Else
    idle_cnt = 0;
If (Trans & (idle_cnt==IDLE_CNT_TH))
     Trans = 0;
If ((Est(n-1)<TH)&(Est(n)>=TH)|
       (Est(n)<TH)&(Est(n-1)>=TH))
Trans_cnt = 0;
Trans=1.
```

In the third step shown in Fig. 7, the OLT makes estimation on bandwidth demanded by the current ONU. If an abrupt change occurs to the Trans, the OLT will allocate more bandwidth because it can be seen from Fig. 6 that a DBRU demand reported by the ONU will be responded after two DBA cycles, while such delay will result in accumulation of data in the BUFFER 404 of the ONU; if no abrupt change occurs to the Trans, the ONU will be allocated with the traffic, in a number equal to that of the data received by the ONU from 403, plus the overheads. When no abrupt change occurs to the Est, a low-pass first-order IIR filter is introduced to the allocated traffic Grant, mainly for serving the function of smoothing the Grant. A value range of a smooth factor alpha of the filter is 0<=alpha<=1. The bigger the alpha is, the better the smoothing effect of the low-pass filter is. This step can be realized through the following codes:

```
If (Trans)
Grant(n) = DBRU(n-1) + coefl * Est(n);
else
Grant(n)=alpha*Grant(n-1) + (1-alpha)*(Est(n)+overhead(n)).
```

The fourth step shown in Fig. 7 is storing various signals that need to be used in the algorithms. This step can be realized through the following codes:

$$\text{DBRU}(n-2) = \text{DBRU}(n-1);$$

$$Est(n-1) = Est(n);$$

$$Grant(n-1)=Grant(n).$$

After the first step to the fourth step are completed, the first step to the fourth step are again performed cyclically to calculate the next TCONT.

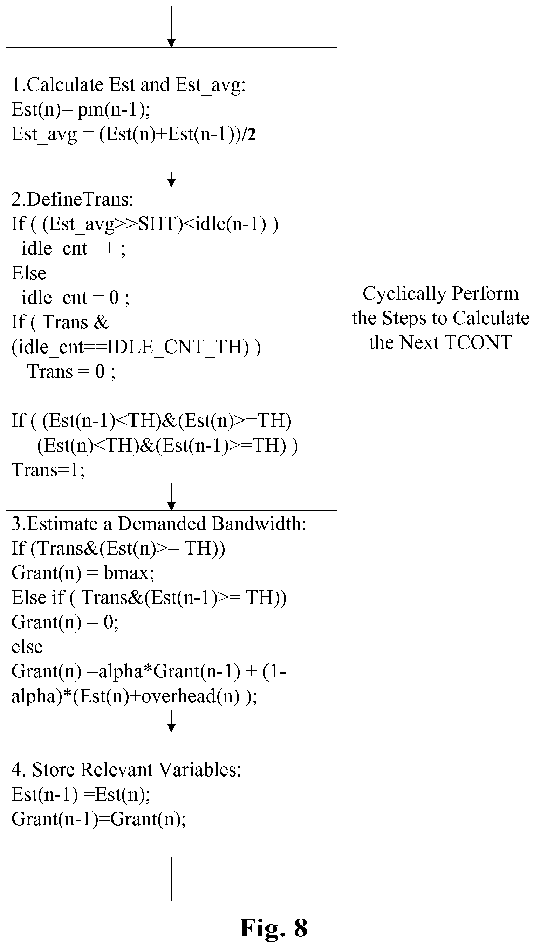

Fig. 8 is a flow chart of an NSR-DBA algorithm according to an embodiment of the present invention. As shown in Fig. 8, in the first step shown in Fig. 8, a mean traffic value Est_avg of two adjacent DBA cycles is calculated, and meanwhile, the traffic is used as traffic estimation value Est of the NSR-DBA algorithm to, which can be realized through the following codes:

$$Est(n)=pm(n-1);$$

$$Est\_avg = (Est(n)+Est(n-1))/2.$$

In the second step, a signal Trans that describes the traffic value Est abrupt change is defined. This Trans signal will become to be at a high level when the traffic transitions from below a threshold TH to above the threshold TH or descends from above the threshold to below the threshold. The Trans will remain at the high level until a statistic value idle of idle data continuously exceeds 2-SHT of the Est_avg and reaches IDLE_CNT_TH times, at which time, the Trans signal becomes to be at a low level. This step can be realized through the following codes:

```
If ((Est_avg>>SHT)<idle(n-1))
idle_cnt ++;
Else
idle_cnt = 0;
If (Trans &(idle_cnt==IDLE_CNT_TH))
Trans = 0;
If ((Est(n-1)<TH)&(Est(n)>=TH)|
      (Est(n)<TH)&(Est(n-1)>=TH))
Trans=1.
```

In the third step, the OLT makes estimation on bandwidth demanded by a current ONU. If a Trans abrupt change transitioning from below the threshold TH to above the threshold TH occurs, the OLT will allocate maximum bandwidth; if a Trans abrupt change descending from above the threshold TH to below the threshold TH occurs, the OLT will not allocate the bandwidth to the TCONT; if no Trans abrupt change occurs, a value of allocated bandwidth will converge to a sum of the traffic statistic and the overheads (Est(n)+overhead(n)), and a specific calculating method of the overheads may refer to the formula (d); when no Est abrupt change occurs, the algorithm introduces a low-pass first-order infinite impulse response ("IIR" for short) filter to the allocated traffic Grant, mainly for serving the function of smoothing and predicting the Grant. A value range of a smooth factor alpha of the filter is 0<=alpha<=1, and the bigger the alpha is, the better the smoothing effect of the low-pass filter is. This step can be realized through the following codes:

```
If (Trans&(Est(n)>= TH))
Grant(n) = bmax;
Else if (Trans&(Est(n-1)>=TH))
Grant(n) = 0;
else
Grant(n)=alpha*Grant(n-1) + (1-alpha)*(Est(n)+overhead(n)).
```

The fourth step is storing various signals that need to be used in the algorithms, which can be realized through the following codes:

$$Est(n-1) = Est(n);$$

$$\text{Grant(n-1)=Grant(n)}.$$

After the first step to the fourth step are completed, the first step to the fourth step are again performed cyclically to calculate the next TCONT

Next, a method that various TCONTs in a same ONU share the PLOU overheads in the present embodiment will be introduced.

A method that different TCONTs in a same ONU share the PLOU overheads is also provided in the present embodiment. The method comprises: adding an identifier to SLA information, wherein the identifier is used to determine, according to a location of a current TCONT of the ONU in a TCONT linked list, whether to allocate to the current TCONT bandwidth for the PLOU overheads. Next, the method will be described in detail.

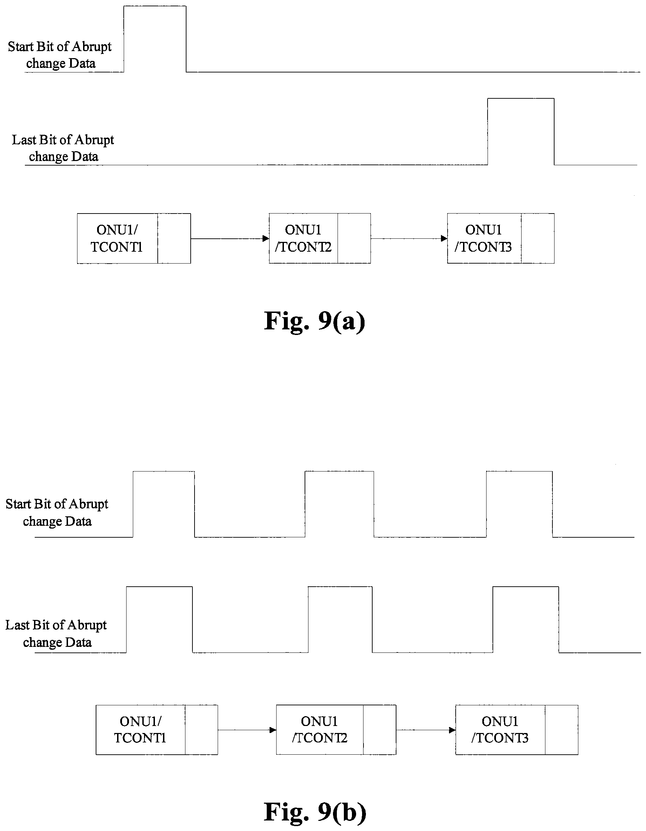

Fig. 9(a) is a schematic diagram showing that different TCONTs in a same ONU share the PLOU overheads according to an embodiment of the present invention; and Fig. 9(b) is a schematic diagram showing that different TCONTs in a same ONU do not share the PLOU overheads according to an embodiment of the present invention. As shown in Fig. 9(a), when the SLA information configured by the software 306 enters into the bandwidth calculating module 302, two bits and quality of service ("QOS" for short) information can be designed to be configured together into a memory of the bandwidth calculating module 302. Among the two bits, one is a start bit of abrupt change data (start of abrupt change, "SOB" for short), and the other is a last bit of the abrupt change data (last of abrupt change, "LOB" for short). Assume that the current TCONT is in the foremost of the TCONT linked list of the ONU, then the SOB should be configured to be 1; assume that the current TCONT is in the backmost of the TCONT linked list of the ONU, the LOB should be configured to be 1; and assume that the current TCONT is in the middle of the TCONT linked list of the ONU, both the SOB and the LOB should be configured to be 0. If and only if the SOB is configured to be 1, the bandwidth calculating module 302 will allocate bandwidth to this TCONT, and the other TCONTs will share this PLOU byte. Of course, different TCONTs in the same ONU also can configure both SOBs and LOBs to be 1 as if they were from different ONUs, as shown in Fig. 9(b), but this will result in waste of the bandwidth.

Embodiment 2

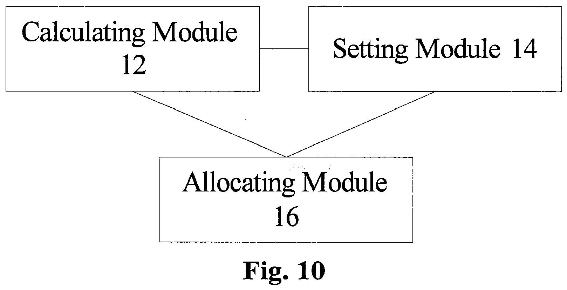

An OLT is provided according to an embodiment of the present invention. Fig. 10 is a structural frame chart of an OLT according to an embodiment of the present invention. As shown in Fig. 10, the OLT comprises a calculating module 12, a setting module 14 and an allocating module 16. Next, the structure will be described in detail.

The calculating module 12 is configured to estimate input traffic of an ONU according to information from an optical network unit ONU; the setting module 14 is coupled to the calculating module 12 and is configured to set input traffic transition signal, wherein the input traffic transition signal is used for indicating a change of the input traffic of two adjacent DBA cycles of the ONU; and the allocating module 16 is coupled to the setting module 14 and the calculating module 12 and is configured to allocate bandwidth to the ONU according to the input traffic of the ONU and the input traffic transition signal.

The calculating module 12 can estimate the input traffic of the ONU in two manners corresponding to manner 1 and manner 2 in the above Embodiment 1, respectively The calculating module 12 in the two manners will be introduced in the following.

In manner 1, the calculating module 12 is specifically configured to estimate the input traffic of the ONU according to a dynamic bandwidth report upstream DBRU and an uplink data traffic from the ONU, wherein a DBRU report contains a data quantity buffered by the ONU

In manner 2, the calculating module 12 is specifically configured to estimate the input traffic of the ONU according to the uplink data traffic from the ONU

It should be indicated that in the two manners above, the specific calculation of the bandwidth has been set forth in detail in Embodiment 1, and unnecessary details will not be given herein.

To sum up, with the embodiments of the present invention, the problems in the related art that the IPACT algorithm is incapable of acquiring the traffic transferred from a customer premises equipment to TCONTs or precisely estimating overheads of the uplink traffic are solved by allocating bandwidths to an ONU according to the input traffic and the input traffic transition signal, and further a steady bandwidth allocation, a good transmission delay and a sufficient use of the uplink bandwidth are obtained.

Obviously, those skilled in the art shall understand that individual modules and individual steps of the present invention can be implemented with general computing devices, they may be integrated in a single computing device or distributed in network formed by a plurality of computing devices, optionally they may be implemented by using program codes executable by computing devices, thus they may be stored in memory devices for execution by the computing devices, or implemented by making them into integrated circuit module respectively, or by making several modules or steps in to a single integrated circuit module. Thus, the present invention is not limited to any particular combination of hardware and software.

**Claims**

1. A bandwidth allocation method used for an optical line terminal, OLT, to allocate bandwidth to an optical network unit, ONU, **characterized by** comprising
estimating input traffic of the ONU according to information from the ONU (S302);
setting an input traffic transition signal, wherein the input traffic transition signal is used for indicating a change of the input traffic of two adjacent dynamic bandwidth allocation, DBA, cycles of the ONU (S304); and
allocating the bandwidth to the ONU according to the input traffic of the ONU and the input traffic transition signal (S306);
wherein estimating the input traffic of the ONU comprises: estimating the input traffic of the ONU according to the uplink data traffic from the ONU;
wherein an abrupt change occurs to the input traffic transition signal when the uplink data traffic of the ONU transitions from below a threshold to above the threshold, and the OLT allocates maximum uplink bandwidth to the ONU; and an abrupt change occurs to the input traffic transition signal when the uplink data traffic of the ONU transitions from above the threshold to below the threshold, and the OLT does not allocate uplink bandwidth to the ONU.

2. The method according to claim 1, **characterized in that** when no abrupt change occurs to the input traffic of two adjacent DBA cycles of the ONU, the bandwidth allocated to the ONU is calculated through the following formula: Grant(n)=alpha*Grant(n-1)+(1-alpha)*(Est(n)+overhead(n)), where Est(n) represents an estimation value of the input traffic of the ONU, Grant(n) represents bandwidth allocated to the ONU in the n-th DBA cycle, Grant(n-1) represents bandwidth allocated to the ONU in the (n-1)-th DBA cycle, and an alpha value is greater than or equal to 0 and less than or equal to 1, wherein overhead(n) represents the size of overheads in the n-th DBA cycle.

3. The method according to claim 2, **characterized in that** calculating the size of the overheads comprises:

   if a responding cycle of the DBA is two cycles, the overheads being calculated through the following formula: overhead(n+1)=Grant(n-1)-(pm(n+1)+idle(n+1)), where overhead(n+1) represents the size of the overheads in an (n+1)-th DBA cycle, Grant(n-1) represents bandwidth allocated to the ONU in the (n-1)-th DBA cycle, pm(n+1) represents uplink data traffic sent from the ONU to the OLT in the (n+1) DBA cycle, and idle(n+1) represents a statistic value of idle data sent from the ONU in the (n+1) DBA cycle;
   if the responding cycle of the DBA is one cycle, the overheads being calculated through the following formula: overhead(n+1)=Grant(n)-(pm(n+1)+ idle(n+1)); and
   if the responding cycle of the DBA is three cycles, the overheads being calculated through the following formula: overhead(n+1)=Grant(n-3)-(pm(n+1)+idle(n+1)).

4. The method according to any one of claims 1-3, **characterized by** further comprising
adding an identifier to service level agreement protocol, SLA, information, wherein the identifier is used to determine, according to a location of a current TCONT of the ONU in a TCONT linked list, whether to allocate bandwidth to the current TCONT.

5. An optical line terminal, **characterized by** comprising:

   a calculating module (12) configured to estimate input traffic of an optical network unit, ONU, according to information from the ONU;
   a setting module (14) configured to set input traffic transition signal, wherein the input traffic is used for indicating a change of the input traffic of two adjacent dynamic bandwidth allocation, DBA, cycles of the ONU; and
   an allocating module (16) configured to allocate the bandwidth to the ONU according to the input traffic of the ONU and the input traffic transition signal;
   wherein the calculating module (12) is configured to estimate the input traffic of the ONU by the following step: estimating the input traffic of the ONU according to the uplink data traffic from the ONU;
   wherein the allocating module (16) is further configured to, after an abrupt change occurs to the input traffic transition signal when the uplink data traffic of the ONU transitions from below a threshold to above the threshold, allocate maximum uplink bandwidth to the ONU; and the allocating module (16) is configured to, after an abrupt change occurs to the input traffic transition signal when the uplink data traffic of the ONU transitions from above the threshold to below the threshold, not allocate uplink bandwidth to the ONU.

6.  The optical line terminal according to claim 5, **characterized in that** the calculating module (12) is specifically configured to estimate the input traffic of the ONU according to a dynamic bandwidth report upstream DBRU and an uplink data traffic from the ONU, wherein the DBRU contains a data quantity buffered by the ONU.

7.  The optical line terminal according to claim 5, **characterized in that** the calculating module (12) is specifically configured to estimate the input traffic of the ONU according to the uplink data traffic from the ONU.


**Patentansprüche**

1.  Bandbreitenzuweisungsverfahren zur Verwendung für ein optisches Leitungsterminal, OLT, um einer optischen Netzabschlusseinheit, ONU, eine Bandbreite zuzuweisen, **dadurch gekennzeichnet, dass** es umfasst:

    Schätzen von Eingangsverkehr der ONU gemäß Informationen von der ONU (S302);
    Einstellen eines Eingangsverkehr-Übergangssignals, wobei das Eingangsverkehr-Übergangssignal verwendet wird, um eine Änderung des Eingangsverkehrs von zwei angrenzenden Zyklen der dynamischen Bandbreitenzuweisung (DBA) der ONU anzuzeigen (S304); und
    Zuweisen der Bandbreite zur ONU gemäß dem Eingangsverkehr der ONU und dem Eingangsverkehr-Übergangssignal (S306);
    wobei das Schätzen des Eingangsverkehrs der ONU umfasst: Schätzen des Eingangsverkehrs der ONU gemäß dem Aufwärtsdatenverkehr von der ONU;
    wobei eine abrupte Änderung an dem Eingangsverkehr-Übergangssignal auftritt, wenn der Aufwärtsdatenverkehr der ONU von unterhalb eines Schwellenwertes zu oberhalb des Schwellenwertes übergeht und das OLT der ONU eine maximale Aufwärtsbandbreite zuweist; und eine abrupte Änderung an dem Eingangsverkehr-Übergangssignal auftritt, wenn der Aufwärtsdatenverkehr der ONU von oberhalb des Schwellenwertes zu unterhalb des Schwellenwertes übergeht und das OLT der ONU keine Aufwärtsbandbreite zuweist.

2.  Verfahren gemäß Anspruch 1, **dadurch gekennzeichnet, dass**, wenn keine abrupte Änderung an dem Eingangsverkehr von zwei angrenzenden DBA-Zyklen der ONU auftritt, die der ONU zugewiesene Bandbreite durch die folgende Formel berechnet wird:
    Grant(n)=alpha*Grant(n-1)+(1-alpha)*(Est(n)+overhead(n)), wobei Est(n) einen Schätzwert des Eingangsverkehrs der ONU darstellt, Grant(n) die der ONU in dem n-ten DBA-Zyklus zugewiesene Bandbreite darstellt, Grant(n-1) die der ONU in dem (n-1)-ten DBA-Zyklus zugewiesene Bandbreite darstellt und ein alpha-Wert größer als oder gleich 0 und weniger als oder gleich 1 ist, wobei overhead(n) die Größe der Overheads im n-ten DBA-Zyklus darstellt.

3.  Verfahren gemäß Anspruch 2, **dadurch gekennzeichnet, dass** das Berechnen der Größe der Overheads umfasst:

    falls ein Ansprechzyklus des DBA zwei Zyklen beträgt, Berechnen der Overheads durch die folgende Formel:
    overhead(n+1)=Grant(n-1)-(pm(n+1)+idle(n+1)), wobei overhead(n+1) die Größe der Overheads in einem (n+1)-ten DBA-Zyklus darstellt, Grant(n-1) die der ONU in dem (n-1)-ten DBA-Zyklus zugewiesene Bandbreite darstellt, pm(n+1) von der ONU an das OLT im (n+1)-DBA-Zyklus gesendeten Aufwärtsdatenverkehr darstellt und idle(n+1) einen statistischen Wert von im (n+1)-DBA-Zyklus von der ONU gesendeten Leerlaufdaten darstellt;
    falls der Ansprechzyklus des DBA ein Zyklus ist, Berechnen der Overheads durch die folgende Formel: overhead(n+1)=Grant(n)-(pm(n+1)+idle(n+1)); und falls der Ansprechzyklus des DBA drei Zyklen beträgt, Berechnen der Overheads durch die folgende Formel:

    $$overhead(n+1)=Grant(n-3)-(pm(n+1)+idle(n+1)).$$

4.  Verfahren gemäß einem der Ansprüche 1 bis 3, **dadurch gekennzeichnet, dass** es ferner umfasst:
    Hinzufügen einer Kennung zu Dienstleistungsvereinbarung-Protokoll-Informationen, SLA-Informationen, wobei die Kennung verwendet wird, um gemäß einer Position eines aktuellen TCONT der ONU in einer TCONT-Verbundliste zu bestimmen, ob dem aktuellen TCONT eine Bandbreite zugewiesen wird.

**5.** Optisches Leitungsterminal, **dadurch gekennzeichnet, dass** es umfasst:

ein Berechnungsmodul (12), das dafür ausgelegt ist, einen Eingangsverkehr einer optischen Netzabschlusseinheit, ONU, gemäß Informationen von der ONU zu schätzen;

ein Einstellmodul (14), das dafür ausgelegt ist, ein Eingangsverkehr-Übergangssignal einzustellen, wobei der Eingangsverkehr dafür verwendet wird, eine Änderung des Eingangsverkehrs von zwei angrenzenden Zyklen der dynamischen Bandbreitenzuweisung, DBA, der ONU anzuzeigen; und

ein Zuweisungsmodul (16), das dafür ausgelegt ist, die Bandbreite der ONU gemäß dem Eingangsverkehr der ONU und dem Eingangsverkehr-Übergangssignal zuzuweisen;

wobei das Berechnungsmodul (12) dafür ausgelegt ist, den Eingangsverkehr der ONU durch den folgenden Schritt zu schätzen: Schätzen des Eingangsverkehrs der ONU gemäß dem Aufwärtsdatenverkehr von der ONU;

wobei das Zuweisungsmodul (16) ferner dafür ausgelegt ist, nachdem eine abrupte Änderung an dem Eingangsverkehr-Übergangssignal aufgetreten ist, wenn der Aufwärtsdatenverkehr der ONU von unterhalb eines Schwellenwertes zu oberhalb des Schwellenwertes übergeht, der ONU die maximale Aufwärtsbandbreite zuzuweisen; und das Zuweisungsmodul (16) dafür ausgelegt ist, nachdem eine abrupte Änderung an dem Eingangsverkehr-Übergangssignal aufgetreten ist, wenn der Aufwärtsdatenverkehr der ONU von oberhalb des Schwellenwertes zu unterhalb des Schwellenwertes übergeht, der ONU keine Aufwärtsbandbreite zuzuweisen.

**6.** Optisches Leitungsterminal gemäß Anspruch 5, **dadurch gekennzeichnet, dass** das Berechnungsmodul (12) insbesondere dafür ausgelegt ist, den Eingangsverkehr der ONU gemäß einem dynamischen Bandbreitenbericht beim Senden DBRU und einem Aufwärtsdatenverkehr von der ONU zu schätzen, wobei der DBRU eine von der ONU gepufferte Datenmenge enthält.

**7.** Optisches Leitungsterminal gemäß Anspruch 5, **dadurch gekennzeichnet, dass** das Berechnungsmodul (12) insbesondere dafür ausgelegt ist, den Eingangsverkehr der ONU gemäß dem Aufwärtsdatenverkehr von der ONU zu schätzen.

## Revendications

**1.** Un procédé d'attribution de bande passante utilisé pour un terminal de ligne optique, OLT, de façon à attribuer une bande passante à une unité de réseau optique, ONU, **caractérisé en ce qu'**il comprend

l'estimation d'un trafic en entrée de l'ONU en fonction d'informations provenant de l'ONU (S302),

le réglage d'un signal de transition de trafic en entrée, le signal de transition de trafic en entrée étant utilisé de façon à indiquer une modification du trafic en entrée de deux cycles d'attribution de bande passante dynamique, DBA, adjacents de l'ONU (S304), et

l'attribution de la bande passante à l'ONU en fonction du trafic en entrée de l'ONU et du signal de transition de trafic en entrée (S306),

dans lequel l'estimation du trafic en entrée de l'ONU comprend : l'estimation du trafic en entrée de l'ONU en fonction du trafic de données en liaison montante à partir de l'ONU,

dans lequel une modification brusque se produit sur le signal de transition de trafic en entrée lorsque le trafic de données en liaison montante de l'ONU passe de sous un seuil à au-dessus du seuil, et l'OLT attribue une bande passante en liaison montante maximale à l'ONU, et une modification brusque se produit sur le signal de transition de trafic en entrée lorsque le trafic de données en liaison montante de l'ONU passe d'au-dessus du seuil à sous le seuil, et l'OLT n'attribue pas une bande passante en liaison montante à l'ONU.

**2.** Le procédé selon la revendication 1, **caractérisé en ce que**, lorsqu'aucune modification brusque ne se produit sur le trafic en entrée de deux cycles DBA adjacents de l'ONU, la bande passante attribuée à l'ONU est calculée à l'aide de la formule suivante :

Octroi(n)=alpha*Octroi(n-1)+(1-alpha)*(Est(n)+surdébit(n)), dans laquelle Est(n) représente une valeur d'estimation du trafic en entrée de l'ONU, Octroi(n) représente une bande passante attribuée à l'ONU dans le n-ième cycle DBA, Octroi(n-1) représente une bande passante attribuée à l'ONU dans le (n-1)-ième cycle DBA, et une valeur alpha est supérieure ou égale à 0 et inférieure ou égale à 1, surdébit(n) représentant la taille de surdébits dans le n-ième cycle DBA.

**3.** Le procédé selon la revendication 2, **caractérisé en ce que** le calcul de la taille des surdébits comprend :

si un cycle en réponse de la DBA est de deux cycles, les surdébits sont calculés à l'aide de la formule suivante:

surdébit(n+1)=Octroi(n-1)-(pm(n+1)+inactif(n+1)), dans laquelle surdébit(n+1) représente la taille des surdébits dans un (n+1)-ième cycle DBA, Octroi(n-1) représente la bande passante attribuée à l'ONU dans le (n-1)-ième cycle DBA, pm(n+1) représente le trafic de données en liaison montante envoyé de l'ONU à l'OLT dans le (n+1) cycle DBA et inactif(n+1) représente une valeur statistique de données inactives envoyées à partir de l'ONU dans le (n+1) cycle DBA,

si le cycle en réponse de la DBA est d'un cycle, les surdébits sont calculés à l'aide de la formule suivante: surdébit(n+1)=Octroi(n)-(pm(n+1)+ inactif(n+1)), et

si le cycle en réponse de la DBA est de trois cycles, les surdébits sont calculés à l'aide de la formule suivante :

$$surdébit(n+1)=Octroi(n-3)-(pm(n+1)+inactif(n+1)).$$

4. Le procédé selon l'une quelconque des revendications 1 à 3, **caractérisé en ce qu'**il comprend en outre l'ajout d'un identifiant à des informations de protocole d'accord de niveau de service, SLA, l'identifiant étant utilisé de façon à déterminer, en fonction d'un emplacement d'un TCONT courant de l'ONU dans une liste chaînée de TCONT, s'il convient d'attribuer une bande passante au TCONT courant.

5. Un terminal de ligne optique, **caractérisé en ce qu'**il comprend :

un module de calcul (12) configuré de façon à estimer un trafic en entrée d'une unité de réseau optique, ONU, en fonction d'informations provenant de l'ONU,

un module de réglage (14) configuré de façon à régler un signal de transition de trafic en entrée, le trafic en entrée étant utilisé de façon à indiquer une modification du trafic en entrée de deux cycles d'attribution de bande passante dynamique, DBA, adjacents de l'ONU, et

un module d'attribution (16) configuré de façon à attribuer la bande passante à l'ONU en fonction du trafic en entrée de l'ONU et du signal de transition de trafic en entrée,

dans lequel le module de calcul (12) est configuré de façon à estimer le trafic en entrée de l'ONU par l'étape suivante : l'estimation du trafic en entrée de l'ONU en fonction du trafic de données en liaison montante provenant de l'ONU,

dans lequel le module d'attribution (16) est configuré en outre de façon à, après l'occurrence d'une modification brusque sur le signal de transition de trafic en entrée lorsque le trafic de données en liaison montante de l'ONU passe de sous un seuil à au-dessus du seuil, attribuer une bande passante en liaison montante maximale à l'ONU, et le module d'attribution (16) est configuré de façon à, après l'occurrence d'une modification brusque sur le signal de transition de trafic en entrée lorsque le trafic de données en liaison montante de l'ONU passe d'au-dessus du seuil à sous le seuil, ne pas attribuer une bande passante en liaison montante à l'ONU.

6. Le terminal de ligne optique selon la revendication 5, **caractérisé en ce que** le module de calcul (12) est spécifiquement configuré de façon à estimer le trafic en entrée de l'ONU en fonction d'un rapport de bande passante dynamique en liaison montante DBRU et d'un trafic de données en liaison montante à partir de l'ONU, le DBRU contenant une quantité de données mises en mémoire tampon par l'ONU.

7. Le terminal de ligne optique selon la revendication 5, **caractérisé en ce que** le module de calcul (12) est spécifiquement configuré de façon à estimer le trafic en entrée de l'ONU en fonction du trafic de données en liaison montante provenant de l'ONU.

**Fig. 1**

Uplink Frame

| PLOU | PLOAM | DBRU | GPON Encapsulation Header | Payload/Idle Frame | DBRU | GPON Encapsulation Header | Payload/Idle Frame | | PLOU | GPON Encapsulation Header | Payload/Idle Frame |

ONU1

ONU2

TCONT1

TCONT2

**Fig. 2**

EP 2 466 769 B1

Estimate input traffic of an ONU according to information from the ONU — S302

Set an input traffic transition signal — S304

Allocate a bandwidth to the ONU according to the input traffic of the ONU and the input traffic transition signal — S306

**Fig. 3**

**Fig. 4**

**Fig. 5**

OLT 501

| (n-1)-th DBA cycle | n-th DBA cycle | (n+1)-th DBA cycle |
| DBA 503 | | |

DBRU Report and Uplink Traffic Statistic        Allocated Uplink Bandwidth

ONU 502

| (n-1)-th DBA cycle | n-th DBA cycle | (n+1)-th DBA cycle |

# Fig. 6

1.Calculate Est and Est_avg:
Est(n)=DBRU(n-1)-DBRU(n-2)+pm(n-2);
Est_avg = (Est(n)+Est(n-1))/2

2.DefineTrans:
If ( (Est_avg>>SHT)<idle(n-1) )
  idle_cnt ++ ;
Else
  idle_cnt = 0 ;
If ( Trans & (idle_cnt==IDLE_CNT_TH) )
  Trans = 0 ;
If ( (Est(n-1)<TH)&(Est(n)>=TH) |
    (Est(n)<TH)&(Est(n-1)>=TH) )
Trans_cnt = 0;
Trans=1;

Cyclically Perform
the Steps to Calculate
the Next TCONT

3.Estimate Demanded Bandwidth:
If (Trans)
Grant(n) = DBRU(n-1) + coef1 * Est(n);
else
Grant(n) =alpha*Grant(n-1) + (1-
alpha)*(Est(n)+overhead(n));

4.Store Relevant Variables:
DBRU(n-2) = DBRU(n-1);
Est(n-1) = Est(n);
Grant(n-1)=Grant(n);

**Fig. 7**

1.Calculate Est and Est_avg:
Est(n)= pm(n-1);
Est_avg = (Est(n)+Est(n-1))/2

2.DefineTrans:
If ( (Est_avg>>SHT)<idle(n-1) )
  idle_cnt ++ ;
Else
  idle_cnt = 0 ;
If ( Trans &
(idle_cnt==IDLE_CNT_TH) )
  Trans = 0 ;

If ( (Est(n-1)<TH)&(Est(n)>=TH) |
    (Est(n)<TH)&(Est(n-1)>=TH) )
Trans=1;

3.Estimate a Demanded Bandwidth:
If (Trans&(Est(n)>= TH))
Grant(n) = bmax;
Else if ( Trans&(Est(n-1)>= TH))
Grant(n) = 0;
else
Grant(n) =alpha*Grant(n-1) + (1-
alpha)*(Est(n)+overhead(n) );

4. Store Relevant Variables:
Est(n-1) =Est(n);
Grant(n-1)=Grant(n);

Cyclically Perform
the Steps to Calculate
the Next TCONT

**Fig. 8**

**Fig. 9(a)**

**Fig. 9(b)**

| Calculating Module 12 | Setting Module 14 |
|---|---|

| Allocating Module 16 |
|---|

**Fig. 10**